# FASCICULE DE BREVET EUROPEEN

(11) **EP 3 078 591 B1**
(45) Date de publication et mention de la délivrance du brevet: **16.08.2017**
(21) Numéro de dépôt: 16158070.9
(22) Date de dépôt: 01.03.2016
(51) Int. Cl.: B64C 27/00

(54) **SYSTEME DE SUSPENSION ANTIVIBRATOIRE D'UNE BARRE DE MAINTIEN D'UNE BOITE DE TRANSMISSION DE PUISSANCE D'AERONEF, DISPOSITIF DE SUSPENSION ANTIVIBRATOIRE, ET AERONEF**
SCHWINGUNGSDÄMPFENDES AUFHÄNGUNGSMITTEL FÜR EINE HALTESTANGE EINES LEISTUNGSGETRIEBES EINES LUFTFAHRZEUGS, SCHWINGUNGSDÄMPFENDE AUFHÄNGEVORRICHTUNG UND LUFTFAHRZEUG
AN ANTIVIBRATION SUSPENSION SYSTEM FOR A TIE BAR OF AN AIRCRAFT POWER TRANSMISSION GEARBOX, AN ANTIVIBRATION SUSPENSION SYSTEM, AND AN AIRCRAFT

(30) Priorité: 13.03.2015 FR 1500485
(43) Date de publication de la demande: 12.10.2016
(73) Titulaire: Airbus Helicopters, 13725 Marignane Cedex (FR)
(72) Inventeur: HOCQUETTE, Julien, 13090 AIX EN PROVENCE (FR)
(74) Mandataire: GPI & Associés

(56) Documents cités:
- FR-A1- 2 787 762
- FR-A1- 2 982 583
- GB-A- 207 028
- US-A- 1 641 230
- US-A- 6 016 289

## Description

La présente invention concerne un système de suspension antivibratoire d'une barre de maintien d'une boîte de transmission principale de puissance, un dispositif de suspension antivibratoire muni de ce système de suspension antivibratoire, et un aéronef muni d'un tel dispositif.

L'invention se situe donc dans le domaine technique restreint des dispositifs pour réduire des vibrations d'aéronefs.

Parmi les aéronefs, les giravions sont munis d'au moins un rotor de sustentation lié à une structure porteuse, cette structure porteuse étant dénommée usuellement « cellule » ou encore « fuselage ».

Un tel aéronef comprend de plus une installation motrice mettant en mouvement une boîte de transmission principale de puissance solidarisée à la structure porteuse de l'aéronef. La boîte de transmission principale de puissance inclut alors un mât entraînant en rotation le rotor de sustentation.

La boîte de transmission principale de puissance est souvent reliée à la structure porteuse par sa paroi de fond et des moyens de fixation annexes comprenant généralement trois ou quatre barres obliques ou verticales. Une telle barre est dénommée plus simplement « barre de maintien » par la suite. La structure de montage du rotor de sustentation comprenant la boîte de transmission principale de puissance et les barres de maintien est parfois dénommée « pylône » par l'homme du métier en raison de sa géométrie.

Le rotor de sustentation et/ou la boîte de transmission principale de puissance peuvent être à l'origine de vibrations susceptibles de détériorer le confort des occupants de l'aéronef en engendrant des mouvements vibratoires et du bruit dans cet aéronef. De plus, des équipements de l'aéronef agencés dans la structure porteuse risquent d'être dégradés par les vibrations générées par l'ensemble mécanique comprenant la boîte de transmission principale de puissance et le rotor de sustentation.

Dès lors, différents dispositifs de suspension antivibratoires sont utilisés pour au moins réduire les vibrations au sein de l'aéronef, et notamment au sein d'une cabine pour le confort des pilotes et des passagers.

Un tel dispositif de suspension antivibratoire doit pouvoir, d'une part, transmettre les charges statiques induites par l'ensemble mécanique, et, d'autre part, filtrer les vibrations induites par cet ensemble mécanique. Un constructeur essaie généralement d'obtenir un dispositif de suspension antivibratoire ayant un impact minimal en termes de masse et de coût.

Parmi l'état de la technique, des systèmes de suspension antivibratoires comprennent des résonateurs. Les résonateurs ont pour effet d'étouffer des vibrations données en créant des vibrations en opposition de phase par rapport aux vibrations données.

Un tel résonateur pour boîte de transmission principale de puissance est parfois muni d'un levier supportant une masse battante pour chaque barre de maintien. Chaque barre de maintien oblique est donc articulée à une structure porteuse par un levier supportant une masse battante. Chaque levier est alors articulé à la structure porteuse par un ressort en torsion.

Eventuellement, chaque levier coopère avec un ressort de torsion ou un tube de torsion.

Par exemple le document FR 2982583 décrit un système de suspension antivibratoire comprenant un levier s'étendant d'une extrémité distale supportant au moins une masse battante à une extrémité proximale munie d'une première articulation pour articuler le levier à une structure porteuse. Le système de suspension antivibratoire a une deuxième articulation pour articuler le levier à une barre de maintien d'une boîte de transmission de puissance. Un moyen de rappel en torsion est muni d'un actionneur rotatif pour régler la raideur en torsion du levier en fonction des conditions de vol de l'aéronef.

Ces dispositifs de suspension antivibratoires munis d'un levier portant une masse sont intéressants. Lorsque la barre de maintien est excitée par une vibration, cette barre de maintien excite à son tour le levier. Dès lors, la masse battante effectue un mouvement de balancier qui permet de générer une vibration en opposition de phase par rapport à la vibration originelle.

Néanmoins, le levier présente une longueur relativement importante pour amplifier conséquemment le battement adéquat de la masse battante. Une telle longueur du levier peut rendre l'implantation du dispositif de suspension antivibratoire délicat dans un environnement encombré.

Le document FR 2.878.594 décrit un dispositif muni d'au moins une platine élastique. Au moins un résonateur comprend deux paliers lamifiés élastomériques fixés chacun à la platine élastique.

Le document US 4.365.770 décrit un dispositif ayant deux masses. Les deux masses sont portées par des bras de suspension. De plus, un ressort s'étend d'une masse à l'autre masse.

Le document EP 0.853.197 n'appartient pas au domaine technique de l'invention en ayant trait à une éolienne. A titre informatif, ce document EP 0.853.197 présente un résonateur muni de deux masses engrenées l'une à l'autre. Les deux masses entraînent un disque en aluminium qui porte un aimant permanent pour générer un courant de Foucault (« eddy current » en langue anglaise).

Les documents FR 2787762, GB 207028, US 1641230 et US 6016289 sont aussi connus.

La présente invention a alors pour objet de proposer un système de suspension antivibratoire pour suspendre une barre de maintien accrochée à une boîte de transmission de puissance d'un aéronef, et notamment un système de suspension antivibratoire tendant à présenter un encombrement limité.

L'invention concerne alors un système de suspension antivibratoire pour suspendre une barre de maintien d'une boîte de transmission de puissance d'un aéronef. Ce système de suspension antivibratoire comprend un levier apte à être articulé à la barre de maintien, ledit système de suspension antivibratoire comportant une masse oscillante.

De plus, le système de suspension antivibratoire comporte un dispositif d'amplification d'un mouvement mécanique interposé entre le levier et la masse oscillante pour qu'un premier mouvement rotatif sur une première angulation du levier autour d'un axe de commande induise un deuxième mouvement rotatif de la masse oscillante sur une deuxième angulation, la deuxième angulation étant supérieure à la première angulation, le dispositif d'amplification d'un mouvement étant muni d'une entrée mécanique solidaire en rotation du levier autour d'un axe de commande et d'une sortie mécanique entraînant en rotation la masse oscillante. Par exemple, la sortie mécanique est solidaire en rotation de la masse oscillante, ou la sortie mécanique entraîne en rotation la masse oscillante au travers d'une chaîne cinématique.

Par suite, l'invention propose un système de suspension antivibratoire muni d'un levier articulé à une barre de maintien.

Dès lors, le levier est solidaire en rotation de l'entrée mécanique du dispositif d'amplification d'un mouvement. La masse oscillante est alors portée par le dispositif d'amplification d'un mouvement et non pas par le levier, en étant entraînée en rotation par la sortie mécanique du dispositif d'amplification d'un mouvement.

Dès lors, l'invention ne propose pas un système usuel muni d'un levier articulé à une barre de maintien et portant une masse oscillante. En effet, le levier du système de suspension antivibratoire a seulement pour fonction de mettre en mouvement le dispositif d'amplification d'un mouvement pour que ce dispositif d'amplification d'un mouvement déplace en rotation la masse oscillante.

Par suite, lorsque la boîte de transmission de puissance est soumise à des vibrations, cette boîte de transmission de puissance peut exciter au moins une barre de maintien. En particulier, la barre de maintien peut être excitée par des efforts dirigés longitudinalement, à savoir selon la longueur d'extension de la barre de maintien.

Le mouvement longitudinal de la barre de maintien excite à son tour le levier. Ce levier représente un organe transmettant les efforts transitant par la barre de maintien au système de suspension antivibratoire. Le levier transforme le mouvement longitudinal d'une barre de maintien en un mouvement rotatif transmis au dispositif d'amplification d'un mouvement.

Le levier oscille alors en effectuant des mouvements rotatifs alternativement dans le sens senestrorsum et le sens dextrorsum autour de l'axe de commande. En conséquence, l'entrée mécanique du dispositif d'amplification d'un mouvement se déplace en rotation sur une première angulation dans le sens senestrorsum et le sens dextrorsum autour de l'axe de commande. Le dispositif d'amplification d'un mouvement amplifie le mouvement rotatif de l'entrée mécanique pour déplacer la sortie mécanique selon un deuxième mouvement rotatif réalisé sur une deuxième angulation alternativement dans le sens senestrorsum et le sens dextrorsum autour d'un axe de sortie. L'axe de sortie peut être confondu avec l'axe de commande. Chaque deuxième angulation est supérieure à la première angulation correspondante.

Par conséquent, une faible oscillation du levier autour de sa position médiane permet d'obtenir une oscillation importante de la masse oscillante autour de sa position médiane. Le mouvement de la masse oscillante permet de générer une vibration pour contrer la vibration de la barre de maintien, au même titre qu'une masse portée par un levier de l'état de la technique.

Néanmoins, le déplacement d'une barre de maintien étant faible, l'utilisation d'un système purement rotatif n'a rien d'évident. C'est la raison pour laquelle des résonateurs connus placent une masse oscillante au bout d'un levier d'une grande longueur. Cependant, le dispositif d'amplification d'un mouvement permet de générer un rapport d'amplification important entre la rotation du levier et la rotation de la masse oscillante.

Par exemple, un système selon l'invention d'une dizaine de centimètres de diamètre permet sensiblement d'obtenir les mêmes performances qu'un levier de soixante dix centimètres de long

Par suite, le système de suspension antivibratoire est un résonateur muni d'un dispositif d'amplification d'un mouvement. Par exemple, le dispositif d'amplification d'un mouvement est un dispositif mécanique, tel qu'un dispositif à engrenages éventuellement épicycloïdal ou un dispositif fonctionnement par friction. Le dispositif d'amplification d'un mouvement permet d'amplifier le mouvement du levier articulé à une barre de maintien. Dès lors, le système de suspension antivibratoire peut présenter un encombrement tendant à être réduit pour obtenir les résultats escomptés, comparé à l'encombrement d'un système muni d'un levier portant une masse oscillante.

Ce système de suspension antivibratoire peut de plus comporter une ou plusieurs des caractéristiques qui suivent.

Ainsi, la masse oscillante peut comporter un élément pesant porté par au moins une tige, au moins une tige s'étendant radialement au regard d'un cercle décrit par l'élément pesant lors du deuxième mouvement rotatif, chaque tige étant solidaire de la sortie mécanique.

La longueur de chaque tige et la forme de l'élément pesant sont déterminées pour optimiser l'encombrement du système de suspension antivibratoire et les vibrations à produire.

Eventuellement, l'élément pesant s'étend circonférentiellement au regard du cercle décrit par cet élément pesant. L'élément pesant a alors la forme d'un arc du cercle décrit par l'élément pesant lorsque le levier du système de suspension antivibratoire est excité par une barre de maintien.

Par ailleurs, le dispositif d'amplification d'un mouvement est par exemple un dispositif mécanique, tel qu'un dispositif cycloïdal ou encore un train épicycloïdal.

Dès lors, le dispositif d'amplification d'un mouvement comporte un étage planétaire en contact avec une pluralité de satellites identiques, l'étage planétaire comprenant la sortie mécanique, les satellites étant portés par un porte-satellites solidaire du levier, l'entrée mécanique comprenant le porte-satellites, le dispositif d'amplification d'un mouvement comportant une couronne, chaque satellite s'étendant diamétralement de l'étage planétaire à la couronne.

L'expression « porte-satellites solidaire du levier » signifie que le porte-satellites effectue un mouvement en rotation autour de l'axe de commande conjointement avec le levier.

Dès lors, le porte-satellites est fixé par des moyens usuels au levier, et en particulier à une extrémité du levier dite « proximale » par commodité. Ce porte-satellites comporte un arbre par satellite, chaque satellite étant libre en rotation autour de l'arbre correspondant. Un moyen de roulement usuel à billes ou à rouleaux peut être interposé entre chaque satellite et l'arbre correspondant. Chaque satellite est usuellement cylindrique.

L'étage planétaire comporte alors une roue planétaire agencée au milieu des satellites. Cet étage planétaire est libre en rotation autour de l'axe de commande.

Par suite, une rotation du levier autour de l'axe de commande induit une rotation du porte-satellites autour de cet axe de commande. La rotation du porte-satellites induit la rotation de chaque satellite autour de l'arbre correspondant du porte-satellites. De plus, les satellites se déplacent le long de la couronne et induisent la rotation de l'étage planétaire autour de l'axe de commande.

Par conséquent, l'étage planétaire induit la rotation de la masse oscillante autour de l'axe de rotation.

Une vibration d'une barre de maintien provoque alors le battement rotatif du levier, et finalement le battement rotatif de la masse oscillante.

L'expression « chaque satellite s'étendant diamétralement de l'étage planétaire à la couronne » signifie qu'un diamètre d'un satellite s'étend de l'étage planétaire à la couronne. Chaque satellite est donc en contact avec l'étage planétaire et la couronne.

Une telle couronne est solidaire d'un carter dudit moyen de suspension antivibratoire. Ce carter est alors immobilisé en étant fixé par des moyens usuels à une structure porteuse de l'aéronef.

En outre, chaque satellite peut présenter un diamètre supérieur à un diamètre dudit étage planétaire.

Par exemple, des satellites de l'ordre de 4 centimètres de diamètre et un étage planétaire de l'ordre de 1 centimètre de diamètre permettent d'obtenir un rapport d'amplification du mouvement en rotation de l'ordre de 10. A titre illustratif, le système de suspension antivibratoire muni d'un tel dispositif d'amplification d'un mouvement a alors des performances du type obtenu avec un levier d'une longueur de 70 centimètres portant une masse battante.

Selon l'invention, chaque satellite peut présenter un diamètre au moins trois fois supérieur à un diamètre dudit étage planétaire, pour obtenir un rapport d'amplification supérieur à 8.

En outre, pour obtenir un résonateur performant, le système de suspension antivibratoire présente favorablement des frottements internes minimisés.

Selon une première variante, chaque satellite comporte en périphérie des dents engrenant des dents de l'étage planétaire et des dents de la couronne.

Chaque satellite et l'étage planétaire comprennent donc des engrenages à dents. Favorablement, des engrenages hélicoïdaux peuvent être utilisés. De tels engrenages présentent des jeux et des frottements limités.

Selon une deuxième variante, chaque satellite comporte un revêtement périphérique en polyuréthane en contact contre un revêtement périphérique de l'étage planétaire et un revêtement périphérique de la couronne.

Par exemple, l'étage planétaire et la couronne comprennent des pistes métalliques, chaque revêtement périphérique en polyuréthane frottant contre ces pistes.

Un tel dispositif d'amplification d'un mouvement présente l'avantage d'être peu onéreux et relativement léger, au détriment des forces de frottement internes.

Par ailleurs, le porte-satellites pouvant comporter un arbre par satellite, chaque arbre étant solidarisé au levier, le porte-satellites peut comporter une plaque de maintien solidarisée à chaque arbre, chaque satellite étant agencé autour d'un arbre et mobile en rotation autour de cet arbre entre la plaque de maintien et le levier.

Les satellites sont alors correctement positionnés.

La plaque de maintien est en outre percée en son centre pour être traversée par un tronçon de l'étage planétaire solidaire de la roue planétaire.

Par ailleurs, le système de suspension antivibratoire peut comporter un carter muni d'un organe de fixation apte à fixer le carter à une structure porteuse d'un aéronef, le dispositif d'amplification d'un mouvement étant relié au levier dans le carter, le levier saillant partiellement du carter au travers d'une ouverture de ce carter.

Le carter est donc un élément structural relié à la structure porteuse de l'aéronef. Ce carter porte le dispositif d'amplification d'un mouvement, la masse oscillante étant éventuellement agencée à l'extérieur du carter.

Le cas échéant, le carter porte la couronne du dispositif d'amplification d'un mouvement.

En outre, le système de suspension antivibratoire peut comporter un tube de torsion, ledit tube de torsion s'étendant d'une première extrémité solidarisée au levier vers une deuxième extrémité immobile en rotation au regard de l'axe de commande.

Le cas échéant, la deuxième extrémité du tube de torsion est solidaire du carter du système de suspension antivibratoire.

Ce tube de torsion permet de supporter les efforts statiques exercés par une barre de maintien sur le levier. De plus, le tube de torsion présente une flexibilité suffisante en rotation pour permettre un mouvement rotatif du levier lorsque la barre de maintien est excitée.

Le fait de relier la barre de maintien a un système rotatif n'est d'autant pas évident que ce système risque de se trouver en butée sous l'effet du poids de l'ensemble mécanique porté par ce levier. Or, le tube de torsion permet de supporter les efforts statiques, sans pour autant empêcher un mouvement du levier lorsque la barre de maintien est excitée dynamiquement.

A titre alternatif, le système de suspension antivibratoire peut présenter un raidisseur indépendant du levier, tel qu'une lame flexible reliant le fond d'une boîte de transmission de puissance à un corps par exemple.

Un dispositif actif du type présenté dans le document FR 2982583 est aussi envisageable.

Outre un système de suspension antivibratoire, l'invention concerne un dispositif de suspension antivibratoire d'un ensemble mécanique muni d'au moins un rotor de sustentation et d'une boîte de transmission de puissance, le dispositif de suspension antivibratoire comprenant au moins trois barres de maintien, chaque barre de maintien étant articulée par une extrémité supérieure à la boîte de transmission et par une extrémité inférieure à un système de suspension antivibratoire.

Dès lors, au moins un système de suspension antivibratoire est du type décrit précédemment.

Par exemple, chaque barre de maintien est articulée à un tel système de suspension antivibratoire.

L'invention vise aussi un aéronef muni d'une structure porteuse et d'un ensemble mécanique comprenant un rotor de sustentation et une boîte de transmission de puissance entraînant en rotation ce rotor de sustentation.

L'aéronef comporte alors un dispositif de suspension antivibratoire selon l'invention.

L'invention et ses avantages apparaîtront avec plus de détails dans le cadre de la description qui suit avec des exemples de réalisation donnés à titre illustratif en référence aux figures annexées qui représentent :
- la figure 1, une vue schématique d'un aéronef selon l'invention,
- la figure 2, un vue schématique d'un moyen de suspension antivibratoire,
- la figure 3, un vue tridimensionnelle d'une réalisation d'un système de suspension antivibratoire,
- la figure 4, un schéma explicitant un dispositif d'amplification d'un mouvement à engrenages,
- la figure 5, un schéma explicitant un dispositif d'amplification d'un mouvement à friction, et
- les figures 6 et 7 une vue de face et une vue éclatée d'une réalisation d'un système de suspension antivibratoire.

Les éléments présents dans plusieurs figures distinctes sont affectés d'une seule et même référence.

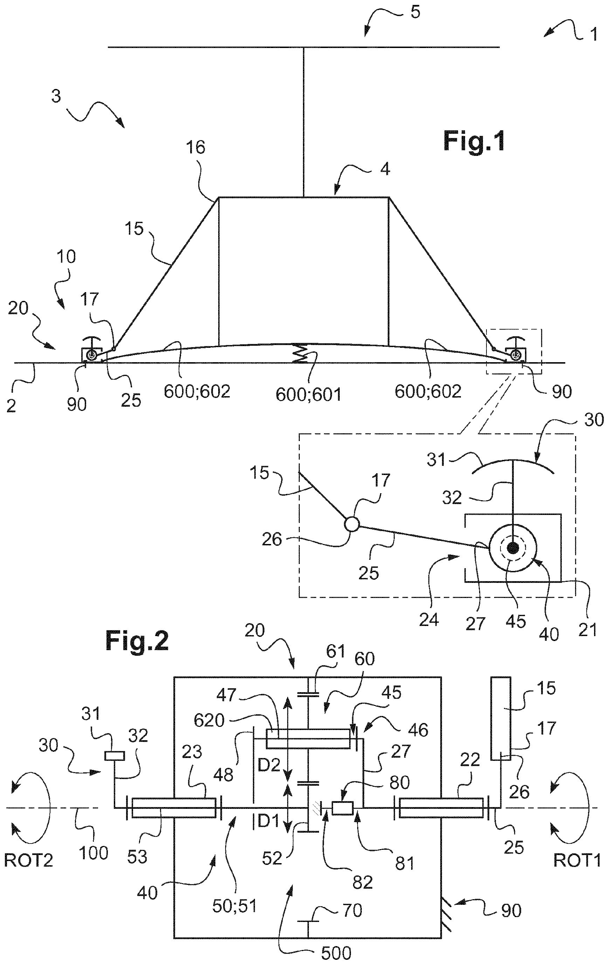

La figure 1 présente un aéronef 1 comportant une structure porteuse 2. De plus, l'aéronef 1 est muni d'un ensemble mécanique 3 porté par la structure porteuse 2 pour participer notamment à la sustentation de l'aéronef 1.

Cet ensemble mécanique 3 inclut un rotor de sustentation 5, une boîte de transmission de puissance 4 de l'ensemble mécanique 3 étant interposée entre le rotor de sustentation 5 et une installation motrice non représentée sur les figures. Dès lors, la boîte de transmission de puissance 4 entraîne en rotation le rotor de sustentation 5.

Cet aéronef 1 comprend un dispositif de suspension antivibratoire pour relier l'ensemble mécanique 3 à la structure porteuse, en réduisant les vibrations et le bruit généré par l'ensemble mécanique 3.

Le dispositif de suspension antivibratoire peut comprendre des raidisseurs 600 et/ou des amortisseurs. Par exemple, le dispositif de suspension antivibratoire inclut des lames flexibles 602 ou un système élastique usuel 601 qui s'étendent entre le fond de la boîte de transmission de puissance et la structure porteuse.

De plus, ce dispositif de suspension antivibratoire inclut au moins une barre de maintien 15, voire au moins trois barres de maintien 15. Chaque barre de maintien s'étend alors d'une extrémité supérieure 16 vers une extrémité inférieure 17. Dès lors, chaque extrémité supérieure 16 est articulée à la boîte de transmission 4 et notamment à une partie supérieure de cette boîte de transmission de puissance 4. A l'inverse, chaque extrémité inférieure 17 est articulée à un système de suspension antivibratoire s'interfaçant entre la barre de maintien 15 et la structure porteuse 2.

Au moins un système de suspension antivibratoire est un système de suspension antivibratoire 20 selon l'invention.

Ce système de suspension antivibratoire 20 comprend un levier 25 qui s'étend longitudinalement d'une extrémité proximale 27 vers une extrémité distale 26. Ce levier 25 est porté par un carter 21 du système de suspension antivibratoire 20. Dès lors, le levier 25 traverse selon la réalisation de la figure 1 une ouverture 24 du carter 21 pour agencer l'extrémité proximale 27 à l'intérieur du carter 21 et l'extrémité distale 26 à l'extérieur du carter 21.

En outre, un tronçon du levier 25 situé notamment en dehors du carter 21 est articulé par une articulation à une barre de maintien 15. Par exemple, une articulation du type articulation à rotule est utilisée. Plus précisément, l'extrémité distale 26 du levier 25 est articulée à l'extrémité inférieure 17 d'une barre de maintien.

Par ailleurs, le système de suspension antivibratoire 20 comporte un dispositif d'amplification d'un mouvement 40 agencé entre le levier 25 et une masse oscillante 30.

En outre, le carter 21 peut comprendre un organe de fixation 90 usuel pour être immobilisé contre la structure porteuse 2. L'organe de fixation 90 comporte par exemple des moyens usuels de collage, vissage, soudage, agrafage...

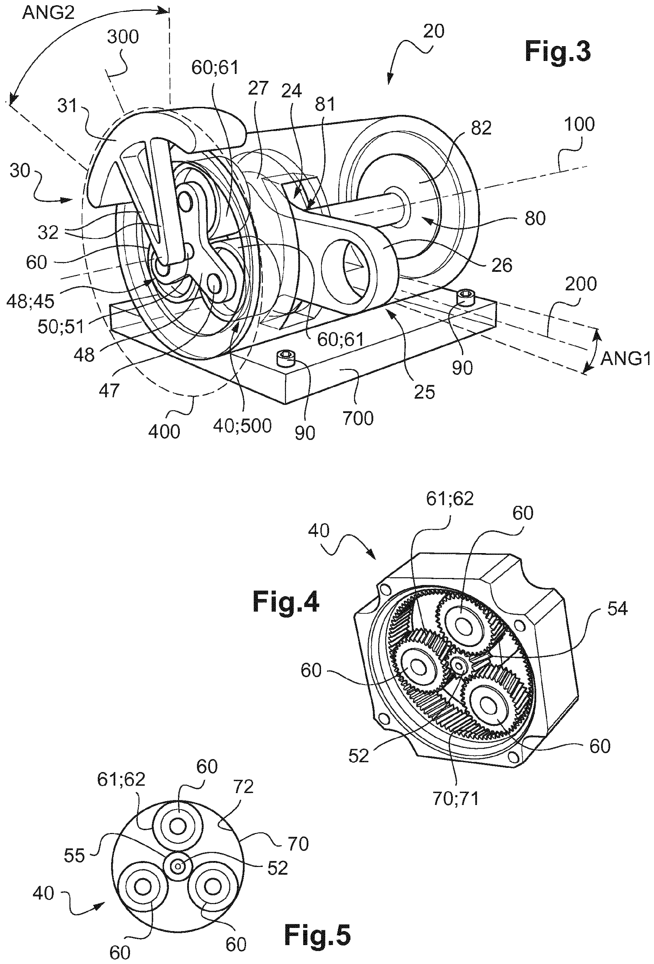

La figure 2 présente un schéma illustrant un système de suspension antivibratoire 20 selon l'invention, la figure 3 présentant une vue en trois dimensions d'un système de suspension antivibratoire 20.

En référence à la figure 2, le carter 21 peut comprendre un palier 22 ou équivalent pour porter le levier 25, sans entraver un degré de liberté en rotation du levier 25 autour d'un axe de commande 100.

En outre, le système de suspension antivibratoire 20 comprend un dispositif d'amplification d'un mouvement 40 éventuellement agencé dans le carter 21. Ce dispositif d'amplification d'un mouvement 40 est muni d'une entrée mécanique 45 qui est solidaire en rotation du levier 25 autour de l'axe de commande 100. Par exemple, l'entrée mécanique 45 est solidarisée à l'extrémité proximale 27 du levier 25 par des moyens usuels de collage, vissage, soudage, agrafage...

De plus, le dispositif d'amplification d'un mouvement 40 est muni d'une sortie mécanique 50 mobile en rotation autour d'un axe de sortie. Par exemple, cet axe de sortie est confondu avec l'axe de commande 100. La sortie mécanique 50 peut être portée par un palier 23 ou équivalent du carter 21.

En outre, cette sortie mécanique 50 est solidaire en rotation d'une masse oscillante 30, dans le sens où la sortie mécanique entraîne en rotation la masse oscillante 30. En particulier, la sortie mécanique 50 et la masse oscillante 30 peuvent conjointement effectuer un mouvement de rotation autour de l'axe de sortie, plus précisément autour de l'axe de commande selon la figure 2.

Dès lors, le dispositif d'amplification d'un mouvement amplifie le premier mouvement rotatif ROT1 du levier pour générer un deuxième mouvement rotatif ROT2 de la masse oscillante d'une amplitude plus importante.

A titre illustratif, le levier peut effectuer un premier mouvement rotatif ROT1 sur une première angulation, à savoir une première amplitude de l'ordre de quelques degrés. Avec un dispositif d'amplification d'un mouvement selon l'invention présentant un rapport d'amplification de l'ordre de 10, la masse oscillante effectue alors un deuxième mouvement rotatif ROT2 sur une deuxième angulation, à savoir une deuxième amplitude de l'ordre de quelques dizaines de degrés.

Le dispositif d'amplification d'un mouvement 40 peut comporter un train d'engrenages. Par exemple, ce train d'engrenages peut être un train cycloïdal ou un train épicycloïdal.

La figure 2 illustre un dispositif d'amplification d'un mouvement 40 comprenant un train épicycloïdal 500.

Dès lors, le dispositif d'amplification d'un mouvement 40 comporte un étage planétaire 51 comprenant une roue planétaire 52 coopérant avec une pluralité de satellites 60 identiques. Par ailleurs, les satellites 60 sont tous portés par un porte-satellites 46 représentant l'entrée mécanique 45 du dispositif d'amplification d'un mouvement.

Ce porte-satellites 46 est solidaire en rotation du levier 25 autour de l'axe de commande 100.

Le porte-satellites 46 comporte alors un arbre 47 par satellite 60. Par suite, les arbres 47 sont solidarisés au levier 25 par des moyens usuels, et en particulier à l'extrémité proximale 27 du levier 25. Eventuellement, le porte-satellites 46 et le levier 25 forment une seule et même pièce mécanique.

Dès lors, chaque satellite est agencé sur un arbre 47 en étant libre en rotation autour de cet arbre 47. Par exemple, un moyen de roulement 620 est interposé entre un satellite et l'arbre correspondant.

De tels satellites 60 comprennent par exemple un cylindre 61. Plus précisément, chaque satellite 60 s'étend diamétralement suivant un diamètre dit « diamètre satellitaire D2 ».

De plus, le porte-satellites 46 de la figure 2 comporte une plaque de maintien 48 qui est solidarisée à chaque arbre 47. Chaque satellite 60 est alors agencé autour d'un arbre 47 et mobile en rotation autour de cet arbre 47 entre la plaque de maintien 48 et le levier 25.

Par ailleurs, le dispositif d'amplification d'un mouvement 40 comporte une couronne 70 en contact avec les satellites 60.

Par suite, chaque satellite 60 s'étend diamétralement de la couronne 70 vers l'étage planétaire 51. Cette couronne 70 est solidaire du carter 21, la couronne pouvant être une partie constitutive du carter 21.

Cet étage planétaire 51 est donc agencé au moins partiellement au milieu des satellites.

L'étage planétaire 51 comprend par exemple une roue planétaire 52 qui coopère avec les satellites, telle qu'un cylindre par exemple. Cette roue planétaire est alors prolongée par une portion longiligne 53 représentant la sortie mécanique reliée à la masse oscillante. La portion longiligne 53 est éventuellement portée par le carter 21, au travers d'un palier 23 ou d'un roulement ou équivalent.

En outre, l'étage planétaire et en particulier sa roue planétaire 52 s'étend diamétralement sur un diamètre dit « diamètre planétaire D1 ».

Dès lors, le diamètre satellitaire D2 est supérieur au diamètre planétaire D1.

Selon la réalisation de la figure 4, chaque satellite 60 comporte en périphérie des dents 62 qui engrènent des dents 54 de la roue planétaire 52 de l'étage planétaire 51 et des dents 71 de la couronne 70.

Selon la réalisation de la figure 5, chaque satellite 60 comporte à sa périphérie un revêtement périphérique 63 en polyuréthane. Ce revêtement périphérique 63 frotte contre un revêtement périphérique 55 de l'étage planétaire 51 et un revêtement périphérique 72 de la couronne.

Par ailleurs et en référence à la figure 3, l'étage planétaire 51 représente la sortie mécanique 50 entraînant en rotation la masse oscillante 30.

Dès lors et en référence à la figure 3, la masse oscillante 30 peut comporter au moins une tige 32 solidaire de cet étage planétaire 51 et notamment de sa portion longiligne 53. Chaque tige s'étend radialement au regard d'un cercle 400 décrit par l'élément pesant.

Un élément pesant 31 de la masse oscillante est alors porté par chaque tige 32. L'élément pesant est ainsi décalé radialement de l'axe de sortie autour duquel cet élément pesant oscille selon un mouvement rotatif.

En particulier, l'élément pesant s'étend circonférentiellement au regard dudit cercle 400.

Par suite, lorsque la barre de maintien articulée au levier 25 est excitée longitudinalement sous l'effet de vibrations, le levier effectue un premier mouvement rotatif ROT1 de part et d'autre d'une position médiane 200 sur une première angulation ANG1.

La rotation du levier 25 autour de l'axe de commande 100 induit une rotation de chaque satellite autour de l'axe de commande 100 et autour de l'arbre correspondant. En outre, les satellites entraînent la rotation de l'étage planétaire 51 autour de l'axe de commande 100.

Cet étage planétaire 51 induit alors un deuxième mouvement rotatif ROT2 de ladite masse oscillante 30 de part et d'autre d'une position médiane sur une deuxième angulation ANG2. La deuxième angulation ANG2 est alors supérieure à la première angulation ANG1.

Par ailleurs, le système de suspension antivibratoire peut comporter un tube de torsion 80.

Ce tube de torsion 80 s'étend d'une première extrémité 81 solidarisée au levier 25 vers une deuxième extrémité 82. Cette deuxième extrémité 82 est immobile en rotation au regard de l'axe de commande 100, en étant par exemple solidarisée au carter 21.

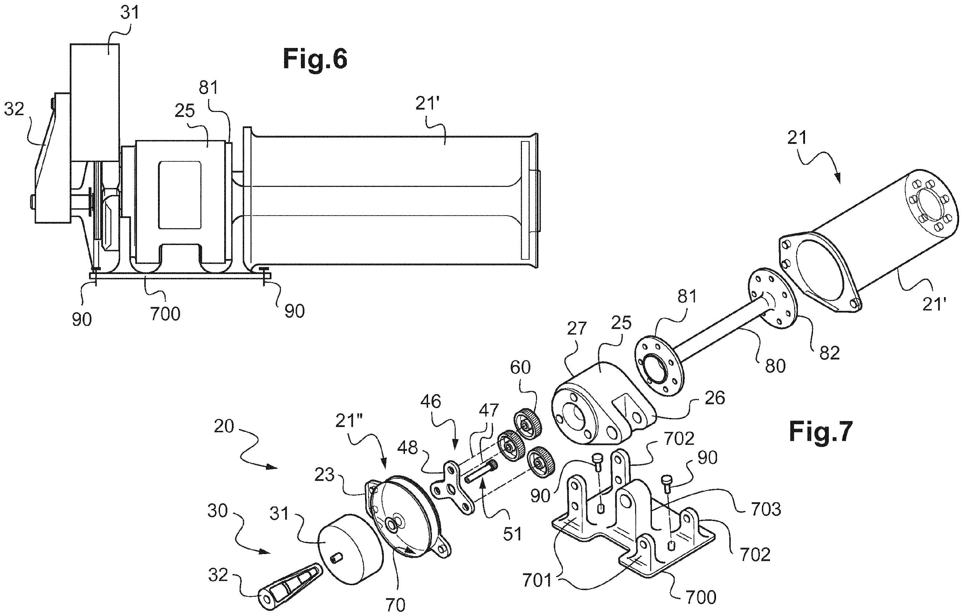

Les figures 6 et 7 présentent une réalisation de l'invention.

Selon cette réalisation et en référence à la figure 6, la masse oscillante 30 peut comprendre un élément pesant de toute forme, et en particulier de forme cylindrique.

Par ailleurs, le carter 21 peut comprendre une plaque 700 apte à être fixée par des organes de fixation 90 usuels à une structure porteuse.

Cette plaque 700 possède des excroissances 701, 702, 703.

Dès lors, le carter peut comporter un cylindre 21' creux dans lequel s'étend le tube de torsion 80. Ce cylindre 21' est par exemple vissé en trois points à deux excroissances arrière 702.

De plus, le carter 21 peut comporter un fond 21" muni de la couronne 70. Ce fond 21" est par exemple vissé en trois points à deux excroissances avant 701. Le fond 21" peut posséder un palier 23 portant l'étage planétaire 51.

En outre, la plaque 700 présentée comporte une excroissance centrale 703, l'extrémité proximale 27 étant articulée à cette excroissance centrale 703.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définit dans les revendications suivantes.

## Revendications

1. Système de suspension antivibratoire (20) pour suspendre une barre de maintien (15) d'une boîte de transmission de puissance (4) d'un aéronef (1), ce système de suspension antivibratoire comprenant un levier (25) apte à être articulé à la barre de maintien (15), ledit système de suspension antivibratoire (20) comportant une masse oscillante (30),
**caractérisé en ce que** le système de suspension antivibratoire (20) comporte un dispositif d'amplification d'un mouvement (40) mécanique interposé entre ledit levier (25) et ladite masse oscillante (30) pour qu'un premier mouvement rotatif (ROT1) sur une première angulation (ANG1) dudit levier (25) autour d'un axe de commande (100) induise un deuxième mouvement rotatif (ROT2) de ladite masse oscillante (30) sur une deuxième angulation (ANG2), ladite deuxième angulation (ANG2) étant supérieure à la première angulation (ANG1), ledit dispositif d'amplification d'un mouvement (40) étant muni d'une entrée mécanique (45) solidaire en rotation dudit levier (25) autour de l'axe de commande (100) et d'une sortie mécanique (50) entraînant en rotation ladite masse oscillante (30).

2. Système de suspension antivibratoire selon la revendication 1,
**caractérisé en ce que** ladite masse oscillante (30) comporte un élément pesant (31) porté par au moins une tige (32), au moins une tige (32) s'étendant radialement au regard d'un cercle (400) décrit par ledit élément pesant (31) lors du deuxième mouvement rotatif (ROT2), chaque tige (32) étant solidaire de ladite sortie mécanique (50).

3. Système de suspension antivibratoire selon la revendication 2,
**caractérisé en ce que** ledit élément pesant (31) s'étend circonférentiellement au regard dudit cercle (400).

4. Système de suspension antivibratoire selon l'une quelconque des revendications 1 à 3,
**caractérisé en ce que** ledit dispositif d'amplification d'un mouvement (40) comporte un étage planétaire (51) en contact avec une pluralité de satellites (60) identiques, ledit étage planétaire (51) comprenant ladite sortie mécanique (50), lesdits satellites (60) étant portés par un porte-satellites (46) solidaire dudit levier (25), ladite entrée mécanique (45) comprenant ledit porte-satellites (46), ledit dispositif d'amplification d'un mouvement (40) comportant une couronne (70), chaque satellite (60) s'étendant diamétralement dudit étage planétaire (51) à la couronne (70).

5. Système de suspension antivibratoire selon la revendication 4,
**caractérisé en ce que** ladite couronne (70) est solidaire d'un carter (21) dudit système de suspension antivibratoire (20).

6. Système de suspension antivibratoire selon l'une quelconque des revendications 4 à 5,
**caractérisé en ce que** chaque satellite (60) présente un diamètre supérieur à un diamètre dudit étage planétaire (51).

7. Système de suspension antivibratoire selon l'une quelconque des revendications 4 à 6,
**caractérisé en ce que** chaque satellite (60) comporte en périphérie des dents (62) engrenant des dents (54) de l'étage planétaire (51) et des dents (71) de la couronne (70).

8. Système de suspension antivibratoire selon l'une quelconque des revendications 4 à 6,
**caractérisé en ce que** chaque satellite (60) comporte un revêtement périphérique (63) en polyuréthane en contact contre un revêtement périphérique (55) dudit étage planétaire (51) et un revêtement périphérique (72) de la couronne (70).

9. Système de suspension antivibratoire selon la revendication 4,
**caractérisé en ce que** ledit dispositif d'amplification d'un mouvement (40) comporte un train épicycloïdal (500).

10. Système de suspension antivibratoire selon l'une quelconque des revendications 4 à 9,
**caractérisé en ce que** ledit porte-satellites (46) comporte un arbre (47) par satellite (60), chaque arbre (47) étant solidarisé au levier (25), ledit porte-satellites (46) comportant une plaque de maintien (48) solidarisée à chaque arbre (47), chaque satellite (60) étant agencé autour d'un arbre (47) et mobile en rotation autour de cet arbre (47) entre ladite plaque de maintien (48) et ledit levier (25).

11. Système de suspension antivibratoire selon l'une quelconque des revendications 1 à 10,
**caractérisé en ce que** ledit système de suspension antivibratoire (20) comporte un carter (21) muni d'un organe de fixation (90) apte à fixer le carter (21) à une structure porteuse (2) d'un aéronef (1), ledit dispositif d'amplification d'un mouvement (40) étant relié au levier (25) dans ledit carter (21), ledit levier (25) saillant partiellement dudit carter (21) au travers d'un ouverture (24) de ce carter (21).

12. Système de suspension antivibratoire selon l'une quelconque des revendications 1 à 11,
**caractérisé en ce que** ledit système de suspension antivibratoire (20) comporte un tube de torsion (80), ledit tube de torsion (80) s'étendant d'une première extrémité (81) solidarisée au levier (25) vers une deuxième extrémité (82) immobile en rotation au regard de l'axe de commande (100).

13. Dispositif de suspension antivibratoire (10) d'un ensemble mécanique (3) muni d'au moins un rotor de sustentation (5) et d'une boîte de transmission de puissance (4), le dispositif de suspension antivibratoire (10) comprenant au moins trois barres de maintien (15), chaque barre de maintien (15) étant articulée par une extrémité supérieure (16) à la boîte de transmission de puissance (4) et par une extrémité inférieure (17) à un système de suspension antivibratoire (20),
**caractérisé en ce qu'**au moins un système de suspension antivibratoire (20) est selon l'une quelconque des revendications 1 à 12.

14. Dispositif de suspension antivibratoire selon la revendication 13,
**caractérisé en ce que** chaque barre de maintien (15) est articulée à un système de suspension antivibratoire (20) selon l'une quelconque des revendications 1 à 12.

15. Aéronef (1) muni d'une structure porteuse (2) et d'un ensemble mécanique (3) comprenant un rotor de sustentation (5) et une boîte de transmission de puissance (4) entraînant en rotation ce rotor de sustentation (5),
**caractérisé en ce que** l'aéronef (1) comporte un dispositif de suspension antivibratoire (10) selon l'une quelconque des revendications 13 à 14.

## Patentansprüche

1. Schwingungsdämpfendes Aufhängungssystem (20) zur Aufhängung einer Haltestange (15) eines Leistungsgetriebes (4) eines Luftfahrzeugs (1), wobei dieses schwingungsdämpfende Aufhängungssystem einen Hebel (25) aufweist, der an der Haltestange (15) angelenkt werden kann, wobei das schwingungsdämpfende Aufhängungssystem (20) eine schwingende Masse (30) aufweist,
**dadurch gekennzeichnet, dass** das schwingungsdämpfende Aufhängungssystem (20) eine Vorrichtung (40) zur Verstärkung einer mechanischen Bewegung aufweist, die zwischen dem Hebel (25) und der schwingenden Masse (30) angeordnet ist, damit eine erste Drehbewegung (ROT1) bei einer ersten Winkelverstellung (ANG1) des Hebels (25) um eine Steuerachse (100) eine zweite Rotationsbewegung (ROT2) der schwingenden Masse (30) bei einer zweiten Winkelverstellung (ANG2) bewirkt, wobei die zweite Winkelverstellung (ANG2) größer ist als die erste Winkelverstellung (ANG1), wobei die Vorrichtung (40) zur Verstärkung einer Bewegung mit einem mechanischen Eingang (45) versehen ist, der drehfest um die Steuerachse (100) mit dem Hebel (25) verbunden ist, und mit einem mechanischen Ausgang (50), der die schwingende Masse (30) zu einer Drehung antreibt.

2. Schwingungsdämpfendes Aufhängungssystem nach Anspruch 1, **dadurch gekennzeichnet, dass** die schwingende Masse (30) ein schweres Element (31) aufweist, das von mindestens einer Stange (32) getragen wird, wobei sich mindestens eine Stange (32) radial bezüglich eines Kreises (400) erstreckt, der von dem schweren Element (31) während der zweiten Drehbewegung (ROT2) beschrieben wird, wobei jede Stange (32) mit dem mechanischen Ausgang (50) fest verbunden ist.

3. Schwingungsdämpfendes Aufhängungssystem nach Anspruch 2, **dadurch gekennzeichnet, dass** das schwere Element (31) sich umfangsmäßig bezüglich des Kreises (400) erstreckt.

4. Schwingungsdämpfendes Aufhängungssystem nach einem der Ansprüche 1 bis 3,
**dadurch gekennzeichnet, dass** die Vorrichtung (40) zur Verstärkung einer Bewegung eine Planetenstufe (51) aufweist, die in Kontakt mit einer Mehrzahl identischer Planeten (60) steht, wobei die Planetenstufe (51) den mechanischen Ausgang (50) aufweist, wobei die Planeten (60) von einem Planetenträger (46) getragen werden, der mit dem Hebel (25) fest verbunden ist, wobei der mechanische Eingang (45) den Planetenträger (46) aufweist, wobei die Vorrichtung (40) zur Verstärkung einer Bewegung einen Kranz (70) aufweist, wobei jeder Planet (60) sich diametral von der Planetenstufe (51) zu dem Kranz (70) erstreckt.

5. Schwingungsdämpfendes Aufhängungssystem nach Anspruch 4, **dadurch gekennzeichnet, dass** der Kranz (70) mit einem Gehäuse (21) des schwingungsdämpfenden Aufhängungssystems (20) fest verbunden ist.

6. Schwingungsdämpfendes Aufhängungssystem nach einem der Ansprüche 4 bis 5,
**dadurch gekennzeichnet, dass** jeder Planet (60) einen Durchmesser aufweist, der größer ist als ein Durchmesser der Planetenstufe (51).

7. Schwingungsdämpfendes Aufhängungssystem nach einem der Ansprüche 4 bis 6,
**dadurch gekennzeichnet, dass** jeder Planet (60) an seinem Umfang Zähne (62) aufweist, die in Zähne (54) der Planetenstufe (51) und in Zähne (71) des Kranzes (70) eingreifen.

8. Schwingungsdämpfendes Aufhängungssystem nach einem der Ansprüche 4 bis 6,
**dadurch gekennzeichnet, dass** jeder Planet (60) an seinem Umfang eine Beschichtung (63) aus Polyurethan aufweist, die in Kontakt mit einer Beschichtung (55) auf dem Umfang der Planetenstufe (51) und mit einer Beschichtung (72) auf dem Umfang des Kranzes (70) steht.

9. Schwingungsdämpfendes Aufhängungssystem nach Anspruch 4, **dadurch gekennzeichnet, dass** die Vorrichtung (40) zur Verstärkung einer Bewegung ein Planetengetriebe (500) aufweist.

10. Schwingungsdämpfendes Aufhängungssystem nach einem der Ansprüche 4 bis 9,
**dadurch gekennzeichnet, dass** der Planetenträger (46) eine Welle (47) pro Planet (60) aufweist, wobei jede Welle (47) mit dem Hebel (25) fest verbunden ist, wobei der Planetenträger (46) eine Halteplatte (48) aufweist, die mit jeder Welle (47) fest verbunden ist, wobei jeder Planet (60) um eine Welle (47) herum angeordnet ist und drehbeweglich um diese Welle (47) zwischen der Halteplatte (48) und dem Hebel (25) ist.

11. Schwingungsdämpfendes Aufhängungssystem nach einem der Ansprüche 1 bis 10,
**dadurch gekennzeichnet, dass** das schwingungsdämpfende Aufhängungssystem (20) ein Gehäuse (21) aufweist, das mit einem Befestigungselement (90) versehen ist, das das Gehäuse (21) an einer Trägerstruktur (2) eines Luftfahrzeugs (1) befestigen kann, wobei die Vorrichtung (40) zur Verstärkung einer Bewegung mit dem Hebel (25) in dem Gehäuse (21) verbunden ist, wobei der Hebel (25) teilweise aus dem Gehäuse (21) durch eine Öffnung (24) dieses Gehäuses (21) übersteht.

12. Schwingungsdämpfendes Aufhängungssystem nach einem der Ansprüche 1 bis 11,
**dadurch gekennzeichnet, dass** das schwingungsdämpfende Aufhängungssystem (20) ein Torsionsrohr (80) aufweist, wobei das Torsionsrohr (80) sich von einem ersten Ende (81), welches an dem Hebel (25) befestigt ist, zu einem zweiten Ende (82) erstreckt, das bezüglich der Steuerachse (100) drehfest ist.

13. Schwingungsdämpfende Aufhängungsvorrichtung (10) einer mechanischen Anordnung (3), die mindestens mit einem Aufhängungsrotor (5) und einem Leistungsgetriebe (4) versehen ist, wobei die schwingungsdämpfende Aufhängungsvorrichtung (10) mindestens drei Haltestangen (15) aufweist, wobei jede Haltestange (15) an einem oberen Ende (16) an dem Leistungsgetriebe (4) angelenkt ist und mit einem unteren Ende (17) an einem schwingungsdämpfenden Aufhängungssystem (20),
**dadurch gekennzeichnet, dass** mindestens ein schwingungsdämpfendes Aufhängungssystem (20) gemäß einem der Ansprüche 1 bis 12 ausgebildet ist.

14. Schwingungsdämpfende Aufhängungsvorrichtung nach Anspruch 13,
**dadurch gekennzeichnet, dass** jede Haltestange (15) an einem schwingungsdämpfenden Aufhängungssystem (20) nach einem der Ansprüche 1 bis 12 angelenkt ist.

15. Luftfahrzeug (1) mit einer Tragstruktur (2) und einer mechanischen Anordnung (3), die einen Auftrieb erzeugenden Rotor (5) und ein Leistungsgetriebe (4) aufweist, das den Auftrieb erzeugenden Rotor (5) antreibt,
**dadurch gekennzeichnet, dass** das Luftfahrzeug (1) eine schwingungsdämpfende Aufhängungsvorrichtung (10) nach einem der Ansprüche 13 bis 14 aufweist.

## Claims

1. An anti-vibration suspension system (20) for suspending a retaining bar (15) for a power transmission gearbox (4) of an aircraft (1), this anti-vibration suspension system comprising a lever (25) capable of being articulated to the retaining bar (15), said anti-vibration suspension system (20) comprising an oscillating mass (30),
**characterised in that** the anti-vibration suspension system (20) comprises a mechanical device for amplifying a movement (40) which is interposed between said lever (25) and said oscillating mass (30) so that a first rotary movement (ROT1) on a first angulation (ANG1) of said lever (25) about a control axis (100) induces a second rotary movement (ROT2) of said oscillating mass (30) on a second angulation (ANG2), said second angulation (ANG2) being greater than the first angulation (ANG1), said device for amplifying a movement (40) being provided with a mechanical input (45) integral in rotation with said lever (25) about the control axis (100), and with a mechanical output (50) which drives said oscillating mass (30) in rotation.

2. An anti-vibration suspension system according to Claim 1,
**characterised in that** said oscillating mass (30) comprises a weighting element (31) borne by at least one rod (32), at least one rod (32) extending radially relative to a circle (400) described by said weighting element (31) upon the second rotary movement (ROT2), each rod (32) being integral with said mechanical output (50).

3. An anti-vibration suspension system according to Claim 2,
**characterised in that** said weighting element (31) extends circumferentially relative to said circle (400).

4. An anti-vibration suspension system according to any one of Claims 1 to 3, **characterised in that** said device for amplifying a movement (40) comprises a planetary stage (51) in contact with a plurality of identical planet gears (60), said planetary stage (51) comprising said mechanical output (50), said planet gears (60) being borne by a planet carrier (46) integral with said lever (25), said mechanical input (45) comprising said planet carrier (46), said device for amplifying a movement (40) comprising a ring gear (70), each planet gear (60) extending diametrically from said planetary stage (51) to the ring gear (70).

5. An anti-vibration suspension system according to Claim 4,
**characterised in that** said ring gear (70) is integral with a casing (21) of said anti-vibration suspension system (20).

6. An anti-vibration suspension system according to any one of Claims 4 to 5, **characterised in that** each planet gear (60) has a diameter greater than a diameter of said planetary stage (51).

7. An anti-vibration suspension system according to any one of Claims 4 to 6, **characterised in that** each planet gear (60) comprises on its periphery teeth (62) which mesh with teeth (54) of the planetary stage (51) and teeth (71) of the ring gear (70).

8. An anti-vibration suspension system according to any one of Claims 4 to 6, **characterised in that** each planet gear (60) comprises a peripheral coating (63) of polyurethane in contact against a peripheral coating (55) of said planetary stage (51) and a peripheral coating (72) of the ring gear (70).

9. An anti-vibration suspension system according to Claim 4,
**characterised in that** said device for amplifying a movement (40) comprises an epicyclic gear train (500).

10. An anti-vibration suspension system according to any one of Claims 4 to 9, **characterised in that** said planet carrier (46) comprises one shaft (47) per planet gear (60), each shaft (47) being secured to the lever (25), said planet carrier (46) comprising a holding plate (48) secured to each shaft (47), each planet gear (60) being arranged about a shaft (47) and mobile in rotation about this shaft (47) between said holding plate (48) and said lever (25).

11. An anti-vibration suspension system according to any one of Claims 1 to 10, **characterised in that** said anti-vibration suspension system (20) comprises a casing (21) provided with a fastening member (90) capable of fastening the casing (21) to a load-bearing structure (2) of an aircraft (1), said device for amplifying a movement (40) being connected to the lever (25) within said casing (21), said lever (25) partially projecting from said casing (21) through an opening (24) in this casing (21).

12. An anti-vibration suspension system according to any one of Claims 1 to 11, **characterised in that** said anti-vibration suspension system (20) comprises a torsion tube (80), said torsion tube (80) extending from a first end (81) secured to the lever (25) to a second end (82) which is prevented from rotating in relation to the control axis (100).

13. An anti-vibration suspension device (10) of a mechanical assembly (3) provided with at least one lift rotor (5) and with a power transmission gearbox (4), the anti-vibration suspension device (10) comprising at least three retaining bars (15), each retaining bar (15) being articulated by an upper end (16) to the power transmission gearbox (4) and by a lower end (17) to an anti-vibration suspension system (20), **characterised in that** at least one anti-vibration suspension system (20) is in accordance with any one of Claims 1 to 12.

14. An anti-vibration suspension device according to Claim 13,
**characterised in that** each retaining bar (15) is articulated to an anti-vibration suspension system (20) according to any one of Claims 1 to 12.

15. An aircraft (1) provided with a load-bearing structure (2) and a mechanical assembly (3) comprising a lift rotor (5) and a power transmission gearbox (4) driving this lift rotor (5) in rotation,
**characterised in that** the aircraft (1) comprises an anti-vibration suspension device (10) according to any one of Claims 13 to 14.
